# EUROPEAN PATENT SPECIFICATION

(11) **EP 3 968 895 B1**
(45) Date of publication and mention of the grant of the patent: **17.01.2024**
(21) Application number: 20726385.6
(22) Date of filing: 14.05.2020
(51) Int. Cl.: A61C 17/34, A46B 15/00

(54) **A DEVICE FOR CLEANING AN INTERDENTAL SPACE**
VORRICHTUNG ZUM REINIGEN EINES ZAHNZWISCHENRAUMES
DISPOSITIF DE NETTOYAGE POUR UN ESPACE INTERDENTAIRE

(30) Priority: 15.05.2019 DK PA201970308
(43) Date of publication of application: 23.03.2022
(73) Proprietor: Tandex A/S, 3540 Lynge (DK)
(72) Inventor: EGLY, Jesper, 3500 Værløse (DK); STRØMSBORG, Jeannie, Heart, 3390 Hundested (DK)
(74) Representative: Inspicos P/S
(86) International application number: PCT/EP2020/063478
(87) International publication number: WO 2020/229606

(56) References cited:
- WO-A1-98/08460
- JP-U- H0 725 829

## Description

### INTRODUCTION

The present invention relates to a device for cleaning an interdental space between adjacent teeth, the device comprising a hand piece and a brush attachable to the hand piece, the hand piece comprising a vibration-motor adapted to vibrate at a vibration frequency, and the brush comprising a bundle of fibres each extending from a brush-base to a fibre termination end.

### BACKGROUND

Oral health has a long history. Early forms of the toothbrush have been in existence since before Christ. Ancient civilizations used a "chew stick," which was a thin twig with a frayed end. These 'chew sticks' were rubbed against the teeth. The bristle toothbrush, similar to the type used today, was not invented until approximately 500 years ago, presumably in China. The bristles were the stiff, coarse hairs taken from the back of a hog's neck and attached to handles made of bone or bamboo. Nylon bristles were introduced by Dupont de Nemours in the 20th century. One of the first nylon toothbrushes was called Doctor West's Miracle Toothbrush. US patent 18,653, dated Nov. 7, 1857 discloses and claims a tooth brush. JP-H-06304218 discloses a device for massaging gums and having a vibration motor, and US5123841 discloses an apparatus for removal of dental plaque from in between adjacent teeth. The apparatus includes a hand piece for mechanically moving a dental brush having a conical shape. The apparatus further comprises vibrating means in said hand piece adapted for mechanically vibrating the dental brush.

Ongoing development is directed to reduce gum diseases, e.g. to control periodontal diseases, dental plaque, and dental caries. Interdental brushes are small-headed brushes available in different widths to match the space between teeth for interdental treatment. They can be cone shaped or cylindrical, and they play an important role in the improvement of oral health.

Together with dental floss, interdental brushes are commonly recommended aids for cleaning between the teeth.

Even though the interdental brushes have improved oral health significantly, problems persist particularly relative to the ability to efficiently remove film of bacteria in the narrow space between adjacent teeth.

One problem relates to the ability of the brushes to efficiently enter into the interdental space. Another problem relates to the ability of the brushes to efficiently remove the film of bacteria, so called dental plaque.

WO9808460 discloses a device for plaque removal comprising a hollow, rigid, plastic, handle housing an electric motor controlled by a switch to drive a bristle holder which carries nylon toothbrush filaments, and wherein the motor shaft is coupled to an eccentrically mounted weight so that as the motor rotates the shaft vibrations are set up.

JP H07 25829U discloses different devices for interdental cleaning.

### SUMMARY

The invention is as defined in the appended claims. If

It is an object of embodiments of the present invention to overcome problems related to interdental treatment. Particularly, it is an object of the invention to facilitate efficient removal of dental plaque in the narrow space between adjacent teeth. It is a further object to facilitate better ergonomic handling of interdental brushes and to allow reviewing and control of the result of the treatment.

For these and other purposes, the invention provides a device for oral cleaning, particularly for use in an interdental space between adjacent teeth. The device comprises a hand piece and a brush.

The hand piece comprises a vibration-motor adapted to vibrate with a vibration frequency and with a vibration amplitude, and the brush comprises a bundle of fibres extending in a fibre direction, e.g. in parallel.

The use of parallel fibres allows an easier insertion of fibres into interdental space since it allows a first subset of the fibres to enter the interdental space and allows a second subset to remain outside the interdental space. Since all the fibres are parallel fibres, the first subset obtains identical direction and cleaning characteristics irrespective of the size of the interdental space and thus independent on the sharing of fibres between the first and second subset of fibres.

When only a sub-set of a bundle of parallel fibres enter into an interdental space, manual movement of the brush may be complicated, e.g. by the contact between the second subset and the two adjacent teeth. The combination between vibration and the bundle of parallel fibres allows easy insertion of at least the second group of fibres and vibratory movement of the fibres and thus rubbing and cleaning of the space between the teeth irrespective of the counteracting force from the fibres of the second subset of fibres. Further, the vibration allows movement with a different frequency, amplitude and direction than what is normally achievable with manual movement of the brush.

The vibration-motor may particularly be configured to vibrate in a plane, herein referred to as vibration plane. This means that the vibration is two-dimensional. It could, in one embodiment, be a back and forth vibration movement along a linear axis, or it could, in another embodiment, be a circular movement in a plane. The vibration in a specific plane provides an increased control of the direction in which the fibres are moved. Further, it may provide a better conception of the cleaning process for the user.

The vibration motor could be configured to vibrate in a vibration plane which is below 60 degrees to the fibre direction, e.g. in the range of 10-40 degrees to the fibre direction, or 20-30 degrees to the fibre direction or parallel with the fibres.

In one embodiment, the vibration motor comprises a rotatable shaft with a mass-body fixed eccentrically to the shaft, wherein the shaft extends in a shaft-direction, the shaft-direction being in the range of 50-80 degrees to the fibre direction thereby providing a vibration plane in the range of 10-40 degrees to the fibre direction. The specific range of angles provides a good share between vibration in the fibre direction and vibration in a direction transverse or perpendicular to the fibre direction.

In one embodiment, the vibration motor comprises a piezo-electric actuator.

The brush may particularly comprise a brush base to which the fibres are attached, and the fibres may extend linearly from the brush base to a free end. At the free end, the fibres may be terminated in a cut which is perpendicular to the axial direction of the fibre. The perpendicular termination of each fibre provides an edge with a good scraping effect and an efficient cleaning even at low vibration amplitude and at a high vibration frequency. The perpendicular cut may therefore improve the brush when used with vibration caused by a vibration-motor as opposed to manual movement of the brush.

The vibration frequency may be above 5 Hz or even above 30 Hz, or even above 50, 60, 70, or 80 Hz, or even above 100 Hz.

The vibration amplitude may be below 2 mm, or even below 1 mm, or below 1/10^{th} of a millimetre.

The fibres could be made from a polymer material with a surface having a static frictional coefficient (SFC) in the range of 0.1-0.4 p. The combined parallel fibres and low surface friction facilitate easy sliding of fibres into the interdental space and the high frequency level at least above 5 Hz allows the fibres to remain in the interdental space for efficient removal of dental plaque. The frequency may particularly be selected outside the natural frequency of the fibres or at least outside the natural frequency of the aforementioned first subset of fibres.

If the fibres had a higher surface friction, it could have influenced the ability to remove plaque positively. However, a higher surface friction could result in the fibres being moved out of the interdental space due to the vibration. Correspondingly, if the frequency had been low, the fibres could have had a tendency to slide out of the interdental space.

To improve the ergonomics and to further reduce the risk of fibres being moved out of the interdental space, the SFC could be in the range of 0.1-0.2 µ, the frequency could be above 40 Hz, and the vibration amplitude could be below 1 mm.

In one embodiment, the static frictional coefficient (SFC) in the range of 0.1-0.2 µ, the frequency is above 50 Hz and the amplitude is below 1/2 of a millimetre. By this combination, the user may not feel any unpleasant vibration, the fibres are easily slid into the interdental space, and the dental plague is efficiently removed.

The fibres of a second group of fibres could be located to form a border about fibres of a first group of fibres, the first group of fibres containing fibres which are longer than the fibres of the second group of fibres. The combination between the shorter and the longer fibres and the vibration at high frequency allows the shorter fibres to rub against the sides of the teeth outside the space between two teeth and the longer fibres may rub against the sides of the teeth in the spacing between the teeth. Due to the motor effected vibration, the fibres may obtain sufficient motion to effectively clean the teeth both with the short and with the long fibres. The second group of fibres could constitute the aforementioned second subset of the bundle which, during use, is considered not to enter the interdental space, and the first group of fibres could constitute the aforementioned first subset of the bundle which during use is considered to enter the interdental space. In one embodiment, the bundle forms a cone shape or a frustum of cone tapering smoothly or stepwise from a flat base to a central point or plane.

The device may comprise a light source arranged to emit a light beam from the brush-base in the fibre direction. This will allow the user to more efficiently inspect the result of the cleaning.

The hand piece and the brush could be formed in reversibly joinable separate components. In this embodiment, the hand piece may comprise a socket part, the brush may comprise a plug part which is attachable to the socket part, and the light source could be arranged in the hand piece to emit light through the socket and plug. This will allow the light source to form part of that component which also houses the vibration motor and thereby allow shared use of a battery to power both the motor and the light source. Further it may allow the brush to be a disposable component and allow reuse of the light source.

The light source could be configured to emit light in the UV-range. This may facilitate either elimination of bacteria and thus reduction of potentially harmful colonies of bacteria. Further, it may facilitate inspection of cleanliness. Some kinds of plaque are more visible in UV-light, and cleanliness may, e.g. be inspected by use of a substance known in the art and capable of exposing bacterial growth under UV light.

In one embodiment, the device comprises the combination of a substance known in the art and capable of exposing bacterial growth under UV light, and an UV light source. The substance may be coated on the fibres, or it may be contained in an ampule for release upon request from the user.

In one embodiment, the light source is configured to emit the light beam while the vibration motor vibrates. This allows bacteria detection and/or bacteria elimination during the cleaning process.

In one embodiment, the device comprises a timer configured to deactivate the light source after a pre-determined duration. This allows the UV light to continue, e.g. for eliminating bacteria on the brush a predetermined time after the cleaning process has ended.

The device may further comprise a camera arranged to capture a field of view. The field of view may particularly be at the end of the fibres. Accordingly, the camera may be configured with a focal point at the free end of the fibres. This will allow the user to survey the cleaning process.

The hand piece and brush could be formed in reversibly joinable separate components and the hand piece may comprise a socket, the brush may comprise a plug attachable to the socket, and the camera may be arranged in the hand piece to capture the field of view through the socket and plug.

Alternatively, the hand piece and brush could be formed in reversibly joinable separate components and the hand piece could comprise a socket, the brush could comprise a plug attachable to the socket, and the camera could comprise a plug attachable to the socket to form replacement for the brush on the hand piece.

The device may comprise a computer system forming an image analysis system configured to analyse the captured field of view and determine presence of dental plaque. Dental plaque may typically be determined based on a colour deviation. Image recognition systems known in the art may be applied for determining such variations and thus determine inter alia plaque.

The device may further comprise a user interface for communicating the result. The device may particularly comprise a simple user interface, e.g. in the form of a lamp which is illuminated until a predetermined cleanliness is achieved. For that purpose, the image analysis system may compare the image with a reference image, or the image analysis system may compare a result of the recognition of plaque with a limit value for presence of plague and based on the comparing, a result may be provided to the user. The device may have a number of pre-programmed reference images corresponding to different dental or oral conditions.

The image analysis system may particularly be configured to determine the presence of dental plague based on radiation with UV-light.

A controller may be configured to activate the light source based on the analysis of the captured field of view, i.e. in a first sequence, the image analysis system may determine an average cleanliness and if the cleanliness is considered to be below a first threshold value, UV light may be activated. With the UV light activated, the image analysis system may conduct a second sequence, and if cleanliness is below the first threshold or below a second threshold, the user may be informed, e.g. by use of the aforementioned light.

The hand piece may extend in a hand-piece-direction. By definition, the hand-piece-direction is the direction of the longest dimension of the hand-piece. The hand-piece-direction could be in the range of 50-80 degrees to the fibre direction. This provides good ergonomic handling of the device.

In one embodiment, vibration amplitude is below 1/100 of a distance from the brush-base to the free end of the shortest fibre.

In one embodiment, the vibration amplitude is below the thickness of the thinnest fibre of the brush.

At least a part of the hand piece and at least a part of the brush could be made from a light conductive material, i.e. a transparent or translucent allowing the part inserted into the mouth to illuminate based on an encapsulated light source. In that way, the light source may be placed in a part of the device which is outside the mouth of the user during use, and the light may propagate through the light conductive material and illuminate the teeth and oral cavity during use. Light conductive materials are known in the art and may include PE, PETG, ABS and SAN (Styrene Acrylonitrile).

The hand piece and brush could be formed in reversibly joinable separate components and the hand piece may comprise a socket, the brush may comprise a plug attachable to the socket, and the plug may be attachable in at least a first orientation and a second orientation relative to the socket, the first orientation and the second orientation providing different directions of the hand piece relative to the fibre direction. This embodiment will allow the user to adapt that fibre direction relative to the hand piece which suits the individual best. The feature of a first and a second orientation may be obtained by contact surfaces between the plug and socket, where at least one of the contact surfaces are not perpendicular to the axial direction of the part to which it belongs. This is explained in further details relative to specific embodiments illustrated in the drawing.

In an alternative embodiment, the hand piece and brush are separate and fixedly joined components and the hand piece is rotatable relative to the brush between a first orientation and a second orientation providing different directions of the hand piece relative to the fibre direction.

The vibration motor is configured to vibrate in a vibration plane to provide a first vibration component in the fibre direction and a second vibration component in a transverse direction being perpendicular to the fibre direction, the second vibration component having an amplitude being at most 50% of the amplitude of the first vibration component.

In one embodiment, the device comprises a timer and is configured to indicate a pre-defined duration to the user. The timer may e.g. be set to 2 seconds, and the user may be notified each time two seconds have past. This will allow the user to make a consistent treatment of each tooth or each interdental space by moving the brush to the next tooth or space every time a notification is recognised.

In one embodiment, the vibration motor is configured for vibration in a first vibration mode and in a second vibration mode, at least one of the amplitude and the frequency being different in the first and second vibration mode.

In one embodiment, the abovementioned two modes of vibration may be used for indicating the abovementioned duration for the user, and the shift between the two modes may therefore constitute the abovementioned notification.

Shifting between the first and second vibration mode may, alternatively be triggered manually each time the user moves from one tooth to an adjacent tooth or interdental space. The device may be configured to record the duration between each triggering and subsequently provide the user with an average time for the treatment or with a list of durations obtained during a treatment. In this way, the device may be used for educational purpose to train the user in obtaining the right level of caution in dental cleaning.

The device may comprise heating means arranged to heat the brush. By heating the brush, faster evaporation and thus drying of the fibres can be obtained, and bacterial growth may thereby be prevented. The heating means may be included in, or be constituted by the aforementioned light source - i.e. an LED or similar light source may be arranged to heat the fibres of the brush and thus increase evaporation.

In a second aspect, not part of the invention, the disclosure provides a method for oral cleaning of an interdental space between adjacent teeth by use of a device previously defined, the method comprising arranging the brush in the interdental space, guiding the brush along the gingival margin and with the brush direction occlusal to the teeth.

The brush could be maintained in the interdental space without movement of the hand piece for at least 2 seconds while the vibration motor vibrates.

The brush could be maintained in the interdental space without movement of the hand piece hand piece while the vibration motor vibrates and until the vibration motor shifts between the first and the second vibration mode.

### DETAILED DESCRIPTION OF EMBODIMENTS

In the following, embodiments of the invention will be described in further details with reference to the drawing in which:
Fig. 1 illustrates a device according to the invention;
Fig. 2 illustrates further details of the device;
Figs. 3-4 illustrate embodiments of the device;
Figs. 5-6 illustrate embodiments of the brush;
Fig. 7 illustrates an embodiment of the device including a controller; and
Figs. 8-9 illustrate specific vibration angles.

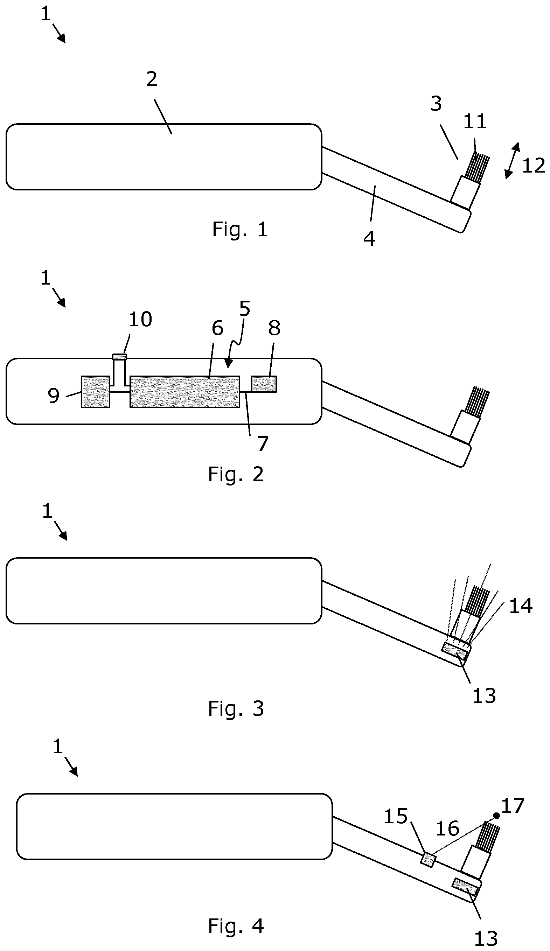

Fig. 1 illustrates a device 1 for oral cleaning. The device comprises a hand piece 2 and a brush 3. The hand piece forms a handle for the user, and the brush is insertable, e.g. into an interdental space, for cleaning the teeth in narrow spaces. The brush extends from a narrow neck portion 4 of the device. The brush comprises a bundle of parallel fibres 11 extending in a fibre direction indicated by the arrow 12.

Fig. 2 illustrates internal components of the device. In this view, the vibration-motor 5 in in the form of an electrical motor 6 with a rotating shaft 7. A mass 8 is attached eccentrically to the rotating shaft such that rotation causes vibration of the device. The motor is powered by the battery 9 via the push button control 10.

Fig. 3 illustrates an embodiment of the device including a light source 13 arranged below the brush 3 to emit light visualised by the dotted lines 14 in the direction of the fibres 11.

Fig. 4 illustrates an embodiment including a camera 15 arranged to capture pictures in the oral cavity. The camera field of view is directed as indicated by the dotted line 16 and with the focal point 17 at the free end of the fibres 11.

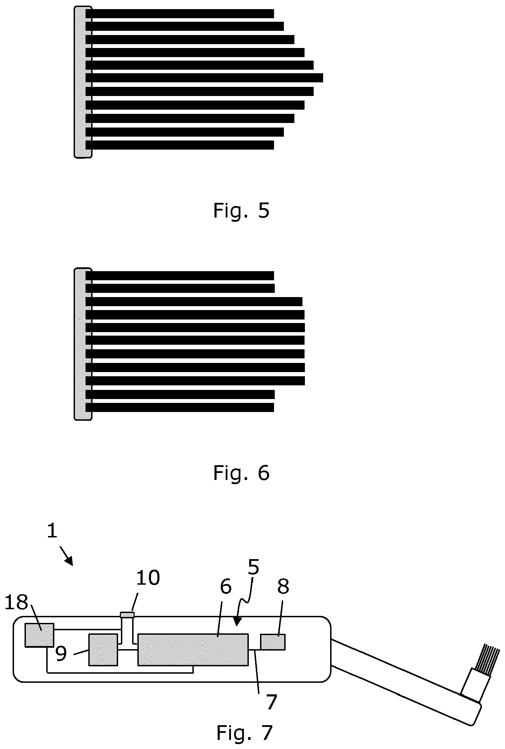

Fig. 5 illustrates details of an embodiment of the brush. In this embodiment, each fibre terminates at the free end in a surface being perpendicular to the fibre direction. This feature creates sharp pointed edges of each fibre and increases the efficiency in combination with relatively high vibration frequencies and low amplitudes. In fig. 5, the fibres are arranged in a cone shape. In this shape, fibres of a second group of fibres form a border about fibres of a first group of fibres. The first group of fibres contains fibres which are longer than the fibres of the second group of fibres. The combination between the shorter and the longer fibres and the vibration at high frequency allows the shorter fibres to rub against the sides of the teeth outside the space between two teeth and the longer fibres may rub against the sides of the teeth in the spacing between the teeth and the motor effected vibration allows an efficient cleaning.

Fig. 6 illustrates another embodiment of a brush having fibres of a second group of fibres forming a border about fibres of a first group of fibres, wherein the first group of fibres contains fibres which are longer than the fibres of the second group of fibres.

Fig. 7 illustrates an embodiment of the device comprising a controller 18 configured for controlling the vibration motor 6 to allow vibration in a first vibration mode and in a second vibration mode with different frequency and/or amplitude The controller is triggered by an integrated timer to thereby provide a tactile indication for the user when to shift from one tooth to the next.

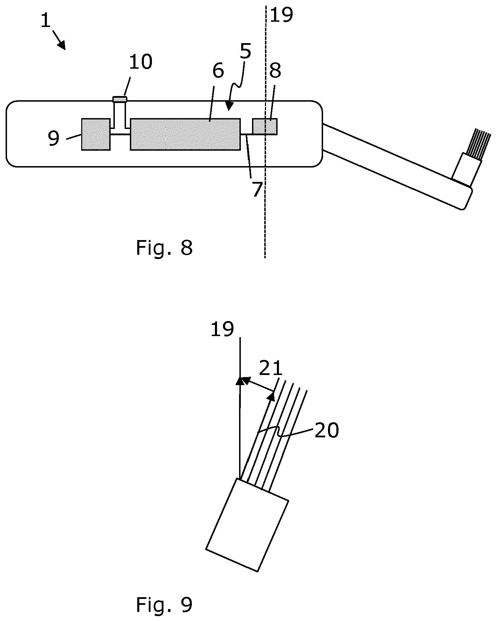

Figs. 8 and 9 illustrate the impact of the angle between the rotating shaft and the fibre direction 12. The arrow 19 indicates the plane in which the rotating mass induces vibration to the hand piece. In Fig. 9, it is illustrated that this vibration plane induce a vibration with a first component 20 in the fibres direction and a second component 21 in a direction perpendicular to the fibre direction

## Claims

1. A device (1) for cleaning an interdental space, the device comprising a hand piece (2) and a brush (3), the hand piece (2) comprising a vibration-motor (6) adapted to vibrate with a vibration frequency and with a vibration amplitude, and the brush comprising a bundle of parallel fibres (11) extending in a fibre direction, wherein the vibration motor (6) is configured to vibrate in a vibration plane to provide a first vibration component (20) in the fibre direction and a second vibration component in a transverse direction being perpendicular to the fibre direction, the second vibration component (21) having an amplitude being at most 50% of the amplitude of the first vibration component.

2. The device according to any of the preceding claims, wherein the brush comprises a brush base and a bundle of fibres, each fibre forming a fixation end and a free end, the fixation end being fixed to the brush-base, wherein each fibre terminates at the free end in a surface being perpendicular to the fibre direction.

3. The device according to any of the preceding claims, wherein the vibration frequency is above 5 Hz, and the vibration amplitude is below 2 mm.

4. The device according to any of the preceding claims, wherein the fibres are made from a polymer material with a surface having a static frictional coefficient (SFC) in the range of 0.1-0.4 µ, preferably in the range of 0.1-0.2 µ, the frequency being above 40 Hz, and the vibration amplitude being below 1 mm.

5. The device according to any of the preceding claims, comprising a light source arranged to emit a light beam from the brush-base in the fibre direction.

6. The device according to claim 5, wherein the hand piece and brush are formed in reversibly joinable separate components and wherein the hand piece comprises a socket, the brush comprises a plug attachable to the socket, and the light source is arranged in the hand piece to emit light through the socket and plug.

7. The device according to claim 7 or 8, wherein the light source is configured to emit light in the UV-range.

8. The device according to any of the preceding claims, comprising a camera arranged to capture a field of view.

9. The device according to claim 8, wherein the hand piece and brush are formed in reversibly joinable separate components and wherein the hand piece comprises a socket, the brush comprises a plug attachable to the socket, and the camera is arranged in the hand piece to capture the field of view through the socket and plug.

10. The device according to any of the preceding claims, wherein the hand piece extends in a hand-piece-direction, the hand-piece-direction being in the range of 50-80 to the fibre direction.

11. The device according to any of the preceding claims, wherein each fibre extends between a fibre base and a free end, and wherein the vibration amplitude is below 1/100 of a distance from the brush-base to the free end of the shortest fibre in the bundle of fibres.

12. The device according to any of the preceding claims, wherein at least a part of the hand piece and at least a part of the brush is made from a light conductive material.

13. The device according to any of the preceding claims, wherein the hand piece and brush are formed in reversibly joinable separate components and wherein the hand piece comprises a socket, the brush comprises a plug attachable to the socket, and the plug is attachable in at least a first orientation and a second orientation relative to the socket, the first orientation and the second orientation providing different directions of the hand piece relative to the fibre direction

14. The device according to any of the preceding claims, wherein the hand piece and brush are separate and fixedly joined components and wherein the hand piece is rotatable relative to the brush between a first orientation and a second orientation providing different directions of the hand piece relative to the fibre direction.

## Patentansprüche

1. Vorrichtung (1) zum Reinigen eines Zahnzwischenraums, wobei die Vorrichtung ein Handstück (2) und eine Bürste (3) umfasst, wobei das Handstück (2) einen Vibrationsmotor (6) umfasst, der dazu ausgelegt ist, mit einer Vibrationsfrequenz und mit einer Vibrationsamplitude zu vibrieren, und die Bürste ein Bündel paralleler Fasern (11) umfasst, die sich in einer Faserrichtung erstrecken, wobei der Vibrationsmotor (6) dazu konfiguriert ist, in einer Vibrationsebene zu vibrieren, um eine erste Vibrationskomponente (20) in der Faserrichtung und eine zweite Vibrationskomponente in einer Querrichtung, die senkrecht zur Faserrichtung verläuft, bereitzustellen, wobei die zweite Vibrationskomponente (21) eine Amplitude aufweist, die höchstens 50 % der Amplitude der ersten Vibrationskomponente beträgt.

2. Vorrichtung nach einem der vorhergehenden Ansprüche, wobei die Bürste eine Bürstenbasis und ein Faserbündel umfasst, wobei jede Faser ein Befestigungsende und ein freies Ende bildet, wobei das Befestigungsende an der Bürstenbasis befestigt ist, wobei jede Faser am freien Ende in einer Fläche mündet, die senkrecht zur Faserrichtung liegt.

3. Vorrichtung nach einem der vorhergehenden Ansprüche, wobei die Vibrationsfrequenz über 5 Hz liegt und die Vibrationsamplitude unter 2 mm liegt.

4. Vorrichtung nach einem der vorhergehenden Ansprüche, wobei die Fasern aus einem Polymermaterial mit einer Oberfläche, die einen statischen Reibungskoeffizienten (SFC) im Bereich von 0,1-0,4 µ, vorzugsweise im Bereich von 0,1-0,2 µ aufweist, hergestellt sind, wobei die Frequenz über 40 Hz liegt und die Vibrationsamplitude unter 1 mm liegt.

5. Vorrichtung nach einem der vorhergehenden Ansprüche, umfassend eine Lichtquelle, die dazu angeordnet ist, einen Lichtstrahl von der Bürstenbasis in der Faserrichtung zu emittieren.

6. Vorrichtung nach Anspruch 5, wobei das Handstück und die Bürste in reversibel verbindbaren separaten Komponenten ausgebildet sind und wobei das Handstück eine Fassung umfasst, die Bürste einen in der Fassung befestigbaren Stecker umfasst und die Lichtquelle im Handstück dazu angeordnet ist, Licht durch die Fassung und den Stecker zu emittieren.

7. Vorrichtung nach Anspruch 7 oder 8, wobei die Lichtquelle dazu konfiguriert ist, Licht im UV-Bereich zu emittieren.

8. Vorrichtung nach einem der vorhergehenden Ansprüche, umfassend eine Kamera, die dazu angeordnet ist, ein Sichtfeld zu erfassen.

9. Vorrichtung nach Anspruch 8, wobei das Handstück und die Bürste in reversibel verbindbaren separaten Komponenten ausgebildet sind und wobei das Handstück eine Fassung umfasst, die Bürste einen in der Fassung befestigbaren Stecker umfasst und die Kamera im Handstück dazu angeordnet ist, das Sichtfeld durch die Fassung und den Stecker zu erfassen.

10. Vorrichtung nach einem der vorhergehenden Ansprüche, wobei sich das Handstück in einer Handstückrichtung erstreckt, wobei die Handstückrichtung im Bereich von 50-80 zur Faserrichtung liegt.

11. Vorrichtung nach einem der vorhergehenden Ansprüche, wobei sich jede Faser zwischen einer Faserbasis und einem freien Ende erstreckt, und wobei die Vibrationsamplitude unter 1/100 einer Entfernung von der Bürstenbasis zum freien Ende der kürzesten Faser im Faserbündel liegt.

12. Vorrichtung nach einem der vorhergehenden Ansprüche, wobei mindestens ein Teil des Handstücks und mindestens ein Teil der Bürste aus einem lichtleitenden Material hergestellt sind.

13. Vorrichtung nach einem der vorhergehenden Ansprüche, wobei das Handstück und die Bürste in reversibel verbindbaren separaten Komponenten ausgebildet sind und wobei das Handstück eine Fassung umfasst, die Bürste einen in der Fassung befestigbaren Stecker umfasst, und der Stecker im Verhältnis zur Fassung in mindestens einer ersten Ausrichtung und einer zweiten Ausrichtung befestigbar ist, wobei die erste Ausrichtung und die zweite Ausrichtung unterschiedliche Richtungen des Handstücks im Verhältnis zur Faserrichtung bereitstellen.

14. Vorrichtung nach einem der vorhergehenden Ansprüche, wobei das Handstück und die Bürste separate und fest verbundene Komponenten sind und wobei das Handstück im Verhältnis zur Bürste zwischen einer ersten Ausrichtung und einer zweiten Ausrichtung drehbar ist, wodurch unterschiedliche Richtungen des Handstücks im Verhältnis zur Faserrichtung bereitgestellt werden.

## Revendications

1. Dispositif (1) pour nettoyer un espace interdentaire, le dispositif comprenant une pièce à main (2) et une brosse (3), la pièce à main (2) comprenant un moteur vibrant (6) adapté pour vibrer avec une fréquence de vibration et avec une amplitude de vibration, et la brosse comprenant un faisceau de fibres parallèles (11) s'étendant dans une direction de fibre, dans lequel le moteur de vibration (6) est configuré pour vibrer dans un plan de vibration afin de fournir une première composante de vibration (20) dans la direction des fibres et une deuxième composante de vibration dans une direction transversale perpendiculaire à la direction des fibres, la deuxième composante de vibration (21) ayant une amplitude étant à environ 50 % de l'amplitude de la première composante de vibration.

2. Dispositif selon une quelconque des revendications précédentes, dans lequel la brosse comprend une base de brosse et un faisceau de fibres, chaque fibre formant une extrémité de fixation et une extrémité libre, l'extrémité de fixation étant fixée à la base de brosse, dans laquelle chaque la fibre se termine à son extrémité libre par une surface perpendiculaire à la direction de la fibre.

3. Dispositif selon une quelconque des revendications précédentes, dans lequel la fréquence de vibration est supérieure à 5 Hz et l'amplitude de vibration est inférieure à 2 mm.

4. Dispositif selon une quelconque des revendications précédentes, dans lequel les fibres sont fabriquées à partir d'un matériau polymère avec une surface ayant un coefficient de frottement statique (SFC) dans la plage de 0.1-0.4 µ, de préférence dans la plage de 0.1-0.2 µ, la fréquence étant supérieure à 40 Hz, et l'amplitude de vibration étant inférieure à 1 mm.

5. Dispositif selon une quelconque des revendications précédentes, comprenant une source lumineuse agencée pour émettre un faisceau lumineux depuis la base de la brosse dans la direction des fibres.

6. Dispositif selon la revendication 5, dans lequel la pièce à main et la brosse sont formées en composants séparés pouvant être assemblés de manière réversible et dans lequel la pièce à main comprend une douille, la brosse comprend une fiche pouvant être fixée à la douille et la source de lumière est disposée dans la pièce à main pour émettre de la lumière à travers la prise et la fiche.

7. Dispositif selon la revendication 7 ou 8, dans lequel la source lumineuse est configurée pour émettre de la lumière dans la plage UV.

8. Dispositif selon une quelconque des revendications précédentes, comprenant une caméra agencée pour capturer un champ de vision.

9. Dispositif selon la revendication 8, dans lequel la pièce à main et la brosse sont formées en composants séparés pouvant être assemblés de manière réversible et dans lequel la pièce à main comprend une douille, la brosse comprend une fiche pouvant être fixée à la douille, et la caméra est disposée dans la pièce à main pour capturer le champ de vision à travers la prise et la fiche.

10. Dispositif selon une quelconque des revendications précédentes, dans lequel la pièce à main s'étend le long d'une direction de la pièce à main, la direction de la pièce à main étant comprise entre 50 et 80 par rapport à la direction de la fibre.

11. Dispositif selon une quelconque des revendications précédentes, dans lequel chaque fibre s'étend entre une base de fibre et une extrémité libre, et dans lequel l'amplitude de vibration est inférieure à 1/100 de la distance de la base de la brosse à l'extrémité libre de la fibre la plus courte dans le faisceau de fibres.

12. Dispositif selon une quelconque des revendications précédentes, dans lequel au moins une partie de la pièce à main et au moins une partie de la brosse sont réalisées à partir d'un matériau conducteur de lumière.

13. Dispositif selon une quelconque des revendications précédentes, dans lequel la pièce à main et la brosse sont formées en composants séparés pouvant être assemblés de manière réversible et dans lequel la pièce à main comprend une douille, la brosse comprend une fiche pouvant être fixée à la douille, et la fiche peut être fixée dans au moins une première orientation et une deuxième orientation par rapport à la douille, la première orientation et la deuxième orientation fournissant des directions différentes de la pièce à main par rapport à la direction de la fibre.

14. Dispositif selon une quelconque des revendications précédentes, dans lequel la pièce à main et la brosse sont des composants séparés et reliés de manière fixe et dans lequel la pièce à main peut tourner par rapport à la brosse entre une première orientation et une deuxième orientation offrant des directions différentes de la pièce à main par rapport à la direction des fibres.
